(19) Europäisches Patentamt
European Patent Office
Office européen des brevets

(11) **EP 4 654 412 A1**

(12) **EUROPÄISCHE PATENTANMELDUNG**

(43) Veröffentlichungstag:
**26.11.2025  Patentblatt 2025/48**

(21) Anmeldenummer: **24177682.2**

(22) Anmeldetag: **23.05.2024**

(51) Internationale Patentklassifikation (IPC):
**H02J 1/08** *(2006.01)*     **H02J 1/10** *(2006.01)*
**H02J 3/36** *(2006.01)*

(52) Gemeinsame Patentklassifikation (CPC):
**H02J 1/08; H02J 1/10;** H02J 3/36

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Innomotics GmbH
90441 Nürnberg (DE)**

(72) Erfinder: **Hofmann, Viktor
95448 Bayreuth (DE)**

(74) Vertreter: **Siemens Patent Attorneys
Postfach 22 16 34
80506 München (DE)**

(54) **MEHRTEILIGER LASTFLUSSREGLER FÜR GLEICHSPANNUNGSNETZE**

(57)    Die Erfindung betrifft ein Lastflussreglermodul (2) für einen Lastflussregler (1) mit einer ersten und einer zweiten Spannungsquelle (61,62), wobei die erste und zweite Spannungsquelle (61,62) jeweils eingerichtet sind, eine Spannung mit einem Gleichanteil und einem Wechselspannungsanteil zu erzeugen. Weiter betrifft die Erfindung einen Lastflussregler (1) zur Übertragung von elektrischer Energie zwischen einem ersten Gleichspannungsteilnetz (11) und einem zweiten Gleichspannungsteilnetz (12), wobei der Lastflussregler (1) zwei derartige Lastflussreglermodule (2) umfasst. Ferner betrifft die Erfindung ein Gleichspannungsnetz (10) mit einem derartigen Lastflussregler (1) sowie einem ersten und einem zweiten Gleichspannungsteilnetz (11,12), wobei die Gleichspannungsteilnetze (11,12) jeweils mit einem Netzanschluss (4) der zwei Lastflussreglermodule (2) elektrisch verbunden sind, wobei die Leitungen (8) zwischen den zwei Lastflussreglern (41,42) angeordnet sind. Die Erfindung betrifft ferner ein Verfahren zum Betreiben eines derartigen Lastflussreglers (1) oder eines derartigen Gleichspannungsnetzes (10), wobei ein erster der zwei Lastflussreglermodule (2) abhängig von einem ersten Gleichstrom ($i_{DC,1}$) zwischen dem Netzanschluss (4) und dem ersten oder zweiten Übertragungsanschluss (41,42) von der ersten und zweiten Spannungsquelle (61,62) jeweils ein Gleichspannungsanteil erzeugt wird, wobei die erste und die zweite Spannungsquelle (61,62) ferner jeweils einen Wechselspannungsanteil erzeugen, der den durch den Gleichspannungsanteil hervorgerufenen Energieaustausch der beiden Spannungsquellen (61,62) kompensiert, wobei die erste Spannungsquelle (61) des zweiten der zwei Lastflussreglermodule (2) einen Wechselspannungsanteil erzeugt, der einen Wechselstrom durch das Lastflussreglermodul (2) kompensiert, wobei die Spannungsquellen (61,62) des zweiten der zwei Lastflussreglermodule (2) jeweils einen Gleichspannungsanteil erzeugen, der derart bemessen ist, dass der durch den Wechselspannungsanteil hervorgerufene Energieaustausch durch den durch den Gleichspannungsanteil hervorgerufenen Energieaustausch kompensiert wird.

FIG 1

EP 4 654 412 A1

## Beschreibung

Die Erfindung betrifft ein Lastflussreglermodul für einen Lastflussregler mit einem Netzanschluss, einem ersten Übertragungsanschluss und einem zweiten Übertragungsanschluss, sowie einer ersten Spannungsquelle. Die Erfindung betrifft weiter einen Lastflussregler zur Übertragung von elektrischer Energie zwischen einem ersten Gleichspannungsteilnetz und einem zweiten Gleichspannungsteilnetz eines Gleichspannungsnetzes mittels zweier Leitungen. Ferner betrifft die Erfindung ein Gleichspannungsnetz mit einem derartigen Lastflussregler, einem ersten und einem zweiten Gleichspannungsteilnetz und zwei Leitungen. Die Erfindung betrifft weiter ein zum Betreiben eines derartigen Lastflussreglers oder eines derartigen Gleichspannungsnetzes.

In vermaschten Gleichspannungsnetzen oder im Allgemeinen bei parallelen Übertragungspfaden mit Gleichspannung, die auch als Teil eines Gleichspannungsnetz aufgefasst werden können, ist die Leistungsaufteilung auf die einzelnen Pfade von den angeschlossenen Konvertern nicht direkt beeinflussbar. Als vermascht wird ein Gleichspannungsnetz unter anderem dann bezeichnet, wenn für die Energieübertragung unterschiedliche Pfade zur Verfügung stehen, insbesondere auch über unterschiedliche Netzwerkknoten, über den ein Energiefluss zwischen einer Energiequelle und einer Energiesenke oder allgemein zwischen zwei Gleichspannungsteilnetzen erfolgen kann. Eine unkontrollierte Aufteilung des Lastflusses kann zu erhöhten Übertragungsverlusten oder im Extremfall zu einer Überlastung eines Gleichspannungsnetzes oder eines Gleichspannungsteilnetzes, insbesondere einer Überlastung von Systemkomponenten, und damit zu einem Systemausfall führen. Dies gilt sowohl für den regulären Betrieb, in dem die einzelnen Übertragungswiderstände auch zeitlich variieren können, als auch für Fehlerfälle, bei denen beispielsweise einzelne Parallelpfade komplett ausfallen.

In Wechselspannungsnetzen ist eine Lastflussregelung seit Jahrzehnten etabliert und wird über die Anpassung der Blindleistung realisiert. In Gleichspannungsnetzen kann der Lastfluss beispielsweise durch eine Gleichspannung und durch Übertragungswiderstände beeinflusst werden. Dies führt jedoch zu Verlusten und zu einem Bedarf an elektrischer Energie für das Einbringen der Gleichspannung.

Gleichspannungsnetze werden auch als DC-Netze bezeichnet. Wechselspannungsnetze werden auch als AC-Netze bezeichnet.

Ein Gleichspannungsteilnetz ist ein Teil eines Gleichspannungsnetzes. Ein Gleichspannungsnetz kann eine Vielzahl von Gleichspannungsteilnetzen umfassen. Ein Gleichspannungsteilnetz weist mindestens eine Energiequelle oder einen elektrischen Verbraucher auf. Darüber hinaus kann es auch eine Vielzahl von Energiequellen und/oder eine Vielzahl von elektrischen Verbrauchern aufweisen.

Der Erfindung liegt die Aufgabe zugrunde, einen Lastflussregler zur Beeinflussung des Leistungsflusses innerhalb eines Gleichspannungsnetzes zu verbessern.

Diese Aufgabe wird durch ein Lastflussreglermodul mit den Merkmalen des Anspruchs 1 gelöst. Weiter wird diese Aufgabe durch einen Lastflussregler mit den Merkmalen des Anspruchs 7 gelöst. Ferner wird diese Aufgabe durch ein Gleichspannungsnetz mit den Merkmalen des Anspruchs 8 gelöst. Diese Aufgabe wird weiter durch ein Verfahren zum Betreiben eines derartigen Lastflussreglers oder eines derartigen Gleichspannungsnetzes mit den Merkmalen des Anspruchs 10 gelöst.

Weitere vorteilhafte Ausgestaltungen der Erfindung sind in den abhängigen Ansprüchen angegeben.

Der Erfindung liegt unter anderem die Erkenntnis zugrunde, dass sich der Lastflussregler auf besonders einfache Weise dadurch realisieren lässt, wenn jeder der Spannungsquellen einen Gleichspannungsanteil und einen Wechselspannungsanteil erzeugt. Es hat sich gezeigt, dass die durch die Spannungsquellen ausgetauschten Energien, eine erste Energie hervorgerufen durch den Gleichspannungsanteil und einen Gleichstrom und eine zweite Energie, hervorgerufen durch den Wechselspannungsanteil und einen Wechselstrom unabhängig voneinander steuerbar sind.

Für die Erzeugung des Wechselspannungsanteil kann jeder beliebige gleichanteilsfreie Zeitverlauf herangezogen werden. Insbesondere die Zeitverläufe von einem Sinus, einem Rechtecksignal, einem trapezförmigen Verlauf oder einem Dreieckverlauf können für die Erzeugung des Wechselspannungsanteils genutzt werden.

Der Gleichspannungsabfall zwischen dem Netzanschluss und dem ersten bzw. zweiten Übertragungsanschluss wird dazu genutzt, die Aufteilung des Energieflusses zwischen Netzanschluss und erstem bzw. zweiten Übertragungsanschluss zu beeinflussen. Dabei wird die Gleichspannung zwischen dem Netzanschluss und dem ersten Übertragungsanschluss durch den Gleichspannungsanteil der ersten Spannungsquelle erzeugt. Weiter wird die Gleichspannung zwischen dem Netzanschluss und dem zweiten Übertragungsanschluss durch den Gleichspannungsanteil der zweiten Spannungsquelle erzeugt.

Dabei müssen die Spannungsquellen den sich aufgrund des erzeugten Gleichspannungsanteils und dem vorhandenen Gleichstrom ergebenen Energieaustausch aufnehmen bzw. abgeben können. Dafür benötigen die Gleichspannungsquellen einen entsprechenden Energiespeicher oder müssen alternativ den Energiebedarf über weitere Anschlüsse mit dem Gleichspannungsnetz austauschen.

Die Aufteilung des Energieflusses zwischen dem ersten und dem zweiten Übertragungsanschluss kann die gleiche Energieflussrichtung vorsehen oder auch unterschiedliche Energieflussrichtungen umfassen. Unter einer unterschiedlichen Energieflussrichtung ist beispielsweise zu verstehen, dass ein Energiebedarf von 140% über den ersten Übertragungsanschluss in Richtung der angeschlossenen Leitung geliefert wird und über den zweiten Übertragungsanschluss 40% des Energiebedarfs in Richtung Netzanschluss übertragen werden. Eine übliche Aufteilung sieht jedoch meist die gleiche Energieflussrichtung vom Netzanschluss zu dem ersten bzw. zweiten Übertragungsanschluss oder umgekehrt vor, bei dem die 100% des Energiebedarfs in jeweilige Anteile im Bereich von 0% bis 100% aufgeteilt werden, bei denen sich in Summe die 100% ergeben. Ansonsten würde Energie im Kreis fließen, dass aufgrund der Auslastung des Gleichspannungsnetzes meistens unerwünscht ist.

Es hat sich gezeigt, dass sich der durch die Spannungsquellen bereitzustellende oder aufzunehmende Energiebedarf dadurch reduzieren lässt, dass neben dem Gleichspannungsanteil ein Wechselspannungsanteil durch die jeweiligen Spannungsquellen erzeugt wird. Um jedoch die Gleichspannungsteilnetze, zwischen denen ein Energieaustausch stattfindet, nicht mit einer Wechselspannung oder einem Wechselstrom zu belasten, werden die einzelnen Gleichspannungsteilnetze mit einem Lastflussreglermodul elektrisch verbunden. Die an der Energieübertragung beteiligten Lastflussreglermodule bilden den Lastflussregler. Dadurch ist es möglich, Wechselspannungen und Wechselströme in den einzelnen Gleichspannungsteilnetzen zu vermeiden. Im Betrieb des Lastflussreglers kompensieren sich die Wechselspannungsanteile, indem die Spannungen der ersten Spannungsquellen der beiden Lastflussreglermodule sich zwischen den Gleichspannungsteilnetzen aufheben. Gleiches gilt für die Wechselspannungsanteile der zweiten Spannungsquellen der zwei Lastflussreglermodule.

Mit anderen Worten heben sich die Wechselspannungsanteile der ersten Spannungsquellen in einer Spannung zwischen den Gleichspannungsteilnetzen auf. Dies wird beispielsweise dadurch erreicht, dass der Wechselspannungsanteil der ersten Spannungsquelle des ersten Lastflussreglermoduls bei gleicher Wahl der Bezugspfeilrichtungen das gleiche Vorzeichen hat wie der Wechselspannungsanteil der ersten Spannungsquelle des zweiten Lastflussreglermoduls. Gleichzeitig heben sich die Wechselspannungsanteile der zweiten Spannungsquelle der beiden Lastflussreglermodule in einer Spannung zwischen dem Netzanschluss und dem zweiten Übertragungsanschluss auf. Dies wird beispielsweise dadurch erreicht, dass der Wechselspannungsanteile der jeweiligen zweiten Spannungsquellen bei gleicher Wahl der Bezugspfeilrichtungen das gleiche Vorzeichen haben.

Von einem Aufheben oder einem Kompensieren kann ausgegangen werden, wenn durch die Kompensation eine Restspannung von maximal 5% der Amplitude des Wechselspannungsanteils in der entsprechenden Leitung verbleibt. Bei einem sinusförmigen Verlauf, Rechteckverlauf, trapezförmigen Verlauf oder Dreieckverlauf kann die Kompensation dadurch vorgenommen werden, dass die Amplituden gleich oder nahezu sind und keinen Phasenunterschied bei gleicher Bezugspfeilrichtung vom Netzanschluss zum Übertragungsanschluss aufweisen. Mit anderen Worten sind bei einem sinusförmigen Verlauf, Rechteckverlauf, trapezförmigen Verlauf oder Dreieckverlauf die Wechselspannungsanteile der jeweiligen ersten und zweiten Spannungsquelle gleich.

Dabei bilden die ersten Spannungsquelle, die zweite Spannungsquelle und der erste Strompfad eine Masche, in der sich ein erster Wechselstrom abhängig von dem Wechselspannungsanteil der ersten Spannungsquelle und dem Wechselspannungsanteil der zweiten Spannungsquelle ausbildet. Die Ausbildung eines Gleichstroms in dieser Masche wird durch den ersten Strompfad verhindert. Zur besseren Steuerbarkeit und Regelbarkeit des ersten Wechselstroms hat es sich als vorteilhaft erwiesen, eine Induktivität in der Masche anzuordnen. Insbesondere kann die Induktivität im ersten Strompfad angeordnet sein. Zur Unterdrückung des Gleichstroms durch den ersten Strompfad kann der erste Strompfad beispielsweise einen Kondensator aufweisen, der beispielsweise in einer Reihenschaltung mit der Induktivität angeordnet ist. Diese Masche bildet sich jeweils in beiden Lastflussreglermodulen des Lastflussreglers.

Die unabhängige Steuerung von Wechselspannungsanteil und Gleichspannungsanteil kann derart erfolgen, dass bei den Spannungsquellen der sich aufgrund der Gleichspannungsanteile ergebene Energieaustausch dem durch die Wechselspannungsanteile hervorgerufene Energieaustausch entgegenwirkt. Mit anderen Worten wird bei den jeweiligen Spannungsquellen der Gleichspannungsanteil und Wechselspannungsanteil derart gewählt, dass diese erste Energie, hervorgerufen durch den Gleichspannungsanteil und einen Gleichstrom, und die zweite Energie, hervorgerufen durch den Wechselspannungsanteil und einen Wechselstrom, sich kompensieren. Dann kann bei der betreffenden Spannungsquelle der Energiespeicher besonders klein gewählt werden. Ebenso benötigt diese Spannungsquelle keine weiteren Anschlüsse zum Energieaustausch mit dem Gleichspannungsnetz. Die entsprechende Spannungsquelle kann dann genau zwei Anschlüsse aufweisen.

Das Verfahren zum Betreiben des mehrteiligen Lastflussreglers beruht auf der Erkenntnis, dass sich für die Aufteilung der Ströme auf die zwei Leitungen jeweils ein Gleichspannungsanteil für die erste und die zweite Spannungsquelle vorzusehen ist. Dies geschieht mit dem ersten Lastflussreglermodul, das mit dem ersten Gleichspannungsteilnetz elektrisch verbunden ist. Diese sind in ihrer Höhe derart zu wählen, dass sich betraglich die gleiche aufgrund des Gleichspannungsanteils hervorgerufene ausgetauschte Energie bei den Spannungsquellen ergibt, die sich jedoch um das Vorzeichen unterscheidet. Diese ausgetauschte Energie wird durch einen Wechselspannungsanteil mit einem sich dadurch ergebenen Wechselstrom in der Masche kompensiert. Das zweite Lastflussreglermodul erkennt bei Eingriff des ersten Lastflussreglermoduls einen Wechselstrom, der sich aufgrund des Wechselspannungsanteil des ersten Lastflussreglermoduls ergibt. Zur Kompensation wird ein entsprechender Wechselspannungsanteil durch das zweite Lastflussreglermodul erzeugt, der den Wechselstrom kompensiert. Der sich daraus ergebene Energieaustausch zwischen den beiden Spannungsquellen wird durch einen Gleichspannungsanteil kompensiert. Aufgrund des Gleichspannungsanteils verändert sich auch der Gleichspannungsanteil des ersten Lastflussreglermoduls. Dies geschieht so lange, bis sich ein stabiler Arbeitspunkt eingestellt hat. Dabei ist es besonders vorteilhaft, dass dieses Verfahren ohne eine Kommunikation zwischen den zwei Lastflussreglermodulen erfolgen kann. Dies ist besonders vorteilhaft, da sich die beiden Lastflussreglermodule oftmals weit voneinander entfernt befinden können. Dies würde eine Kommunikation störungsanfällig und teuer machen. Daher ist es besonders vorteilhaft, dass ein Lastflussregler mit zwei derartigen Lastflussreglermodulen ohne Kommunikation zwischen den Lastflussreglermodulen stabil und zuverlässig betrieben werden kann.

Besonders vorteilhaft ist der Lastflussregler, wenn der Lastflussregler eine Steuervorrichtung umfasst, die eingerichtet ist, das Verfahren oder zumindest Teile des Verfahrens zum Betreiben eines derartigen Lastflussreglers auszuführen.

Dazu ist es weiter besonders vorteilhaft, wenn das Lastflussreglermodul eine weitere Steuervorrichtung umfasst, die eingerichtet ist, entweder

- abhängig von einem ersten Gleichstrom zwischen dem Netzanschluss und dem ersten Übertragungsanschluss und/oder einem zweiten Gleichstrom zwischen dem Netzanschluss und dem zweiten Übertragungsanschluss jeweils einen Gleichspannungsanteil von der ersten und zweiten Spannungsquelle zu erzeugen, wobei der durch den Gleichspannungsanteil hervorgerufene Energieaustausch der zwei Spannungsquellen den gleichen Betrag und unterschiedliches Vorzeichen haben, wobei die erste und die zweite Spannungsquelle jeweils einen Wechselspannungsanteil erzeugen, der den durch den Gleichspannungsanteil hervorgerufenen Energieaustausch der beiden Spannungsquellen kompensiert,
oder

- einen Wechselstrom oder eine Wechselspannung gegenüber einem Bezugspotential am ersten Übertragungsanschluss zu erfassen, wobei die erste Spannungsquelle einen Wechselspannungsanteil erzeugt, der einem Wechselstrom durch das Lastflussreglermodul entgegenwirkt oder kompensiert, wobei die Spannungsquellen jeweils einen Gleichspannungsanteil erzeugen, der derart bemessen ist, dass der durch den Wechselspannungsanteil hervorgerufene Energieaustausch durch den durch den Gleichspannungsanteil hervorgerufenen Energieaustausch kompensiert wird.

Bei dem Wechselstrom durch das Lastflussreglermodul handelt es sich um den gemessenen Strom oder um den durch den Wechselspannungsanteils des anderen Lastflussreglermoduls erzeugten Wechselstrom.

Der Lastflussregler ist dabei Teil eines Gleichspannungsnetzes. Dieser verbindet ein erstes Gleichspannungsteilnetz mit einem zweiten Gleichspannungteilnetz. Diese Verbindung wird über zwei Leitungen geschaffen, die jeweils mit einem der Übertragungsanschlüsse verbunden sind. Die Leitungen können dabei weit verzweigte Wege eines Gleichspannungsnetzes betreffen. Durch den Lastflussregler ist es möglich, die Aufteilung der Leistung auf die beiden Leitungen zu beeinflussen, zu steuern oder zu regeln.

Insbesondere bei einem weit verzweigten Gleichspannungsnetz, bei dem sich unterschiedliche Längen der ersten und der zweiten Leitung ergeben, kann die Verwendung des vorgeschlagenen Lastflussreglers besonders vorteilhaft sein. Durch die vorhandenen Impedanzverhältnisse kann es gerade bei stark unterschiedlichen Leitungslängen von mehr als 10% zu einer stark unterschiedlichen Aufteilung des Leistungsflusses kommen, der mit einer Überlastung einzelner Teile des Gleichspannungsnetzes einhergeht. Besonders stark ist dieser Effekt bei Leitungslängen, bei der sich erste und zweite Leitung um mehr als 40% unterscheiden. Um diese Überlastungen zu vermeiden und eine gute Ausnutzung der vorhandenen Komponenten und Leitungen des Gleichspannungsnetzes sicherzustellen, hat sich die Verwendung des Lastflussreglers als besonders hilfreich und vorteilhaft erwiesen.

Die Wechselspannungsanteile der ersten und zweiten Spannungsquellen haben die gleiche Frequenz. Die gleiche Frequenz der ersten und zweiten Spannungsquelle ermöglichen den Energieaustausch zwischen diesen Spannungsquellen. Somit ergibt sich, dass die erste und zweite Spannungsquelle mit einem Wechselspannungsanteil mit einer ersten Frequenz betrieben werden.

Bei gleichen Impedanzverhältnissen der beiden Lastflussreglermodule in ihrer jeweiligen Masche ergibt sich im stabilen Arbeitspunkt jeweils ein betraglich gleicher Gleichspannungsanteil jeweils bei den beiden ersten Spannungsquellen und den beiden zweiten Spannungsquellen.

Durch das vorgeschlagene Verfahren ergibt sich aufgrund der jeweiligen Gleichspannungsanteile und der jeweiligen Wechselspannungsanteile der Spannungsquellen, dass die aufgrund von Gleichanteilen und Wechselanteilen ausgetauschte Energie der jeweiligen Spannungsquelle im zeitlichen Mittel gleich null ist. Damit ist es möglich, alle Spannungsquellen der beiden Lastflussreglermodule energieneutral zu betreiben. Das heißt, die Spannungsquellen nehmen bei einem derartigen Betrieb im zeitlichen Mittel weder Energie auf noch geben sie Energie ab.

Damit ist es möglich, die erste und zweite Spannungsquelle zu betreiben, ohne Energie aufnehmen zu müssen.

Die Spannungsquellen benötigen keinen Anschluss zum Austausch von elektrischer Energie mit dem Gleichspannungsnetz. Daher benötigen die Spannungsquellen nur genau zwei Anschlüsse. Auch ein vorhandener Energiespeicher der Spannungsquellen kann besonders klein ausgeführt werden, da nur geringe Mengen an Energie auszutauschen sind.

Der Lastflussregler umfasst mindestens zwei Lastflussreglermodule, wobei die Lastflussreglermodule ausgebildet sind, an den Übertragungsanschlüssen mittels Leitungen miteinander elektrisch verbunden zu werden.

Bei einer vorteilhaften Ausgestaltung der Erfindung wird mindestens eine der Spannungsquellen durch ein Submodul oder eine Reihenschaltung von Submodulen gebildet, wobei das Submodul mindestens zwei Halbleiterschalter und mindestens einen Kondensator aufweist, die derart angeordnet sind, dass mittels der Halbleiter zumindest die Schaltzustände Kurzschluss und Kondensatorspannung an Anschlüssen des Submoduls erzeugbar sind. Ein derartiges Submodul ist aus einem modularen Multilevel Stromrichter (M2C oder MMC) bereits bekannt. Ein derartiges Submodul hat genau zwei Anschlüsse, welche die Spannung der Spannungsquelle bestimmen und über die gleichzeitig der Energieaustausch mit dem Energiespeicher, dem Kondensator, erfolgt. Ein derartiges Submodul wird auch als zweipolig bezeichnet. Damit können alle Spannungsquellen, die energieneutral beispielsweise mit dem vorgeschlagenen Verfahren betrieben werden, durch Submodule oder einer Reihenschaltung von Submodulen betrieben werden. Eine zusätzliche Energieregelung ist nicht erforderlich, so dass diese Submodule genau zwei Anschlüsse aufweisen. Dies ermöglicht, alle Spannungsquellen energieneutral zu betreiben und alle Spannungsquellen können durch ein Submodul oder einer Reihenschaltung von Submodulen ausgebildet sein.

Bei einer weiteren vorteilhaften Ausgestaltung der Erfindung weist das Submodule mindestens vier Halbleiterschalter und mindestens einen Kondensator auf, die derart angeordnet sind, dass mittels der Halbleiter zumindest die Schaltzustände Kurzschluss, positive Kondensatorspannung und negative Kondensatorspannung an den Anschlüssen des Submoduls erzeugbar sind. Eine mögliche Ausgestaltung für ein derartiges Submodul ist das sogenannte Vollbrückenmodul. Dieses erlaubt die Bereitstellung einer Spannung mit unterschiedlichem Vorzeichen. Damit ist es möglich unter allen Betriebsbedingungen, den energieneutralen Betrieb aller Spannungsquellen des Lastflussreglers sicherzustellen. Somit können alle Spannungsquellen durch ein zweipoliges Submodul oder einer Reihenschaltung von zweipoligen Submodulen ausgebildet sein. In diesem Fall kann in einer vorteilhaften Ausgestaltung der Erfindung das Submodul bzw. können die Submodule jeweils nur genau zwei Anschlüsse aufweisen.

Bei einer weiteren vorteilhaften Ausgestaltung der Erfindung weist das Submodul bzw. weisen die Submodule genau zwei Anschlüsse zum Austausch elektrischer Energie auf. Bei dem energieneutralen Betrieb ist es möglich, den Energieaustausch allein über die beiden Anschlüsse des Submoduls vorzunehmen. Weitere Anschlüsse zum Auf- oder Entladen des Energiespeichers unabhängig von der Spannung der Spannungsquelle sind nicht erforderlich. Dabei kann das Submodul weitere Anschlüsse wie beispielsweise für die Steuerung oder Regelung, der Kühlung etc. aufweisen, die jedoch nicht oder nicht maßgeblich zur Energieübertragung beitragen.

Bei einer vorteilhaften Ausgestaltung der Erfindung wird der erste Strompfad durch eine Gleichspannungsquelle gebildet. Eine besonders einfache Ausgestaltung des ersten Pfades kann durch eine Gleichspannungsquelle erfolgen. Dabei wird die Gleichspannungsquelle in ihrem Spannungswert derart gesteuert oder geregelt, die Ausbildung eines Gleichstroms in dem Pfad zu verhindern. Damit kann die Gleichspannungsquelle baugleich zu den Spannungsquellen ausgeführt sein. Beispielsweise kann in einer vorteilhaften Ausgestaltung der Erfindung mindestens eine der Gleichspannungsquellen durch ein weiteres Submodul oder eine Reihenschaltung von weiteren Submodulen gebildet werden, wobei das weitere Submodul mindestens zwei Halbleiterschalter und mindestens einen Kondensator aufweist, die derart angeordnet sind, dass mittels der Halbleiter zumindest die Schaltzustände Kurzschluss und Kondensatorspannung an Anschlüssen des weiteren Submoduls erzeugbar sind. Dies erhöht die Gleichteile, erhöht damit nicht nur die Zuverlässigkeit, sondern ermöglicht es auch, den Lastflussregler kostengünstig herzustellen. Die Gleichspannungsquellen können dabei als Submodul oder als Reihenschaltung von Submodulen ausgebildet sein, wobei das Submodul mindestens zwei Halbleiterschalter und mindestens einen Kondensator aufweist, die derart angeordnet sind, dass mittels der Halbleiter zumindest die Schaltzustände Kurzschluss und Kondensatorspannung an Anschlüssen des Submoduls erzeugbar sind.

Im Folgenden wird die Erfindung anhand der in den Figuren dargestellten Ausführungsbeispiele näher beschreiben und erläutert. Es zeigen:

FIG 1             ein Gleichspannungsnetz mit einem Lastflussregler,
FIG 2             ein Ausführungsbeispiel eines Lastflussreglers,
FIG 3, FIG 4      Übersichtsbilder zur Verdeutlichung des Betriebsverfahrens und
FIG 5 bis FIG 7   Ausführungsbeispiele von Submodulen.

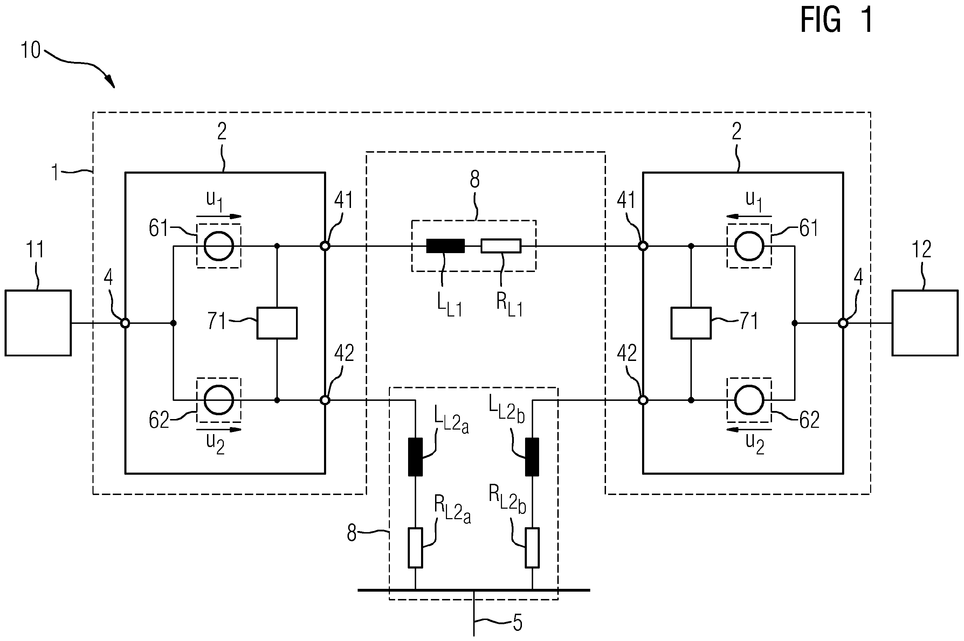

Die FIG 1 zeigt ein Gleichspannungsnetz 10 mit einem ersten Gleichspannungteilnetz 11 und einem zweiten Gleichspannungsteilnetz 12. Diese Gleichspannungsteilnetze 11,12 weisen mindestens eine Energiequelle oder einen elektrischen Verbraucher auf. Darüber hinaus können diese Gleichspannungteilnetze 11,12 auch eine Vielzahl von Energiequellen und/oder elektrischen Verbrauchern aufweisen. Der Energieaustausch innerhalb des Gleichspannungsnetzes 10 erfolgt mit einer Gleichspannung. Das erste Gleichspannungsteilnetz 11 ist über Leitungen 8 mit dem zweiten Gleichspannungsteilnetz 12 verbunden. Das Verhalten der Leitungen 8 kann dabei mit Hilfe eines Widerstands $R_{Lx}$ und einer Induktivität $L_{Lx}$ modelliert werden. Die Leitungen müssen nicht notwendigerweise parallel verlaufen, sondern können unterschiedliche Wege in einem vermaschten Gleichspannungsnetz 10 darstellen. Dabei kann eine der Leitungen 8 auch über einen zur anderen Leitung weit entfernten Netzwerkknoten 5 gebildet werden. Dies führt dazu, dass sich die Leitungslängen deutlich, das heißt um mehr als 10% und bei einem Verlauf über einen derart entfernten Netzwerkknoten 5 auch teilweise um mehr als 40%, unterscheiden. Dies würde ohne geeignete Maßnahmen zu einer unterschiedlichen Auslastung und damit zu einer ungleichen Belastung der beiden Leitungen 8 führen. Um die Belastung durch die Aufteilung der Ströme und den damit einhergehenden Leistungen beeinflussen zu können, ist jeweils zwischen dem Gleichspannungsteilnetz 11,12 und den Leitungen 8 ein Lastflussreglermodul 2 in Reihe zu den Leitungen 8 angeordnet. Die beiden Lastflussreglermodule 2 bilden den Lastflussregler. Eine Kommunikation zwischen den beiden ist aufgrund des vorgeschlagenen Betriebsverfahrens nicht erforderlich.

Der Lastflussregler 1 weist als Anschlüsse einen Netzanschluss 4, einen ersten Übertragungsanschluss 41 und einen zweiten Übertragungsanschluss 42 auf. Der Netzanschluss 4 dient der Verbindung mit dem ersten Gleichspannungsteilnetz 11. Zwischen dem Netzanschluss 4 und dem ersten Übertragungsanschluss 41 ist eine erste Spannungsquelle 61 angeordnet. Zwischen dem Netzanschluss 4 und dem zweiten Übertragungsanschluss 42 ist eine zweite Spannungsquelle 62 angeordnet.

Zwischen dem ersten Übertragungsanschluss 41 und dem zweiten Übertragungsanschluss 42 ist ein erster Strompfad 71 angeordnet, der derart ausgebildet ist, die Entstehung eines Gleichstroms durch den ersten Strompfad 71 zu verhindern. Der erste Strompfad 71 dient dazu, wie in den folgenden Figuren näher erläutert, für einen Wechselstrom eine Masche 81 zu schaffen, mit der elektrische Energie zwischen den Elementen der Masche 81 ausgetauscht werden kann. Damit kann ein Energiebedarf oder Energieüberschuss aufgrund der Gleichspannungsanteile der einzelnen Spannungsquellen 61,62 durch den jeweiligen Wechselspannungsanteil ausgeglichen und kompensiert werden. Gleichzeitig treten diese Wechselspannungsanteile außerhalb des Lastflussreglers 1, d. h. in den Gleichspannungsteilnetzen 10,11, nicht in Erscheinung.

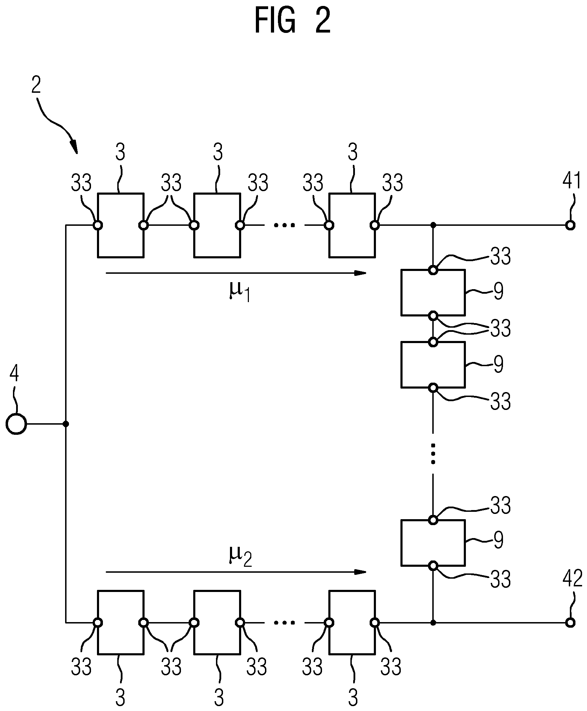

Durch eine geeignete Wahl von Gleichspannungsanteil und Wechselspanungsanteil der jeweiligen Spannungsquellen 61,62 können die gleichspannungsanteiligen Energiebedarfe und Energieüberschüsse mittels der Wechselspannungskomponenten vollständig ausgeglichen werden. Dies ermöglicht den Einsatz von Spannungsquellen, die nur einen Energiespeicher mit geringer (Speicher-)Kapazität aufweisen. Ebenso brauchen diese Spannungsquellen auch keine weiteren Anschlüsse, über die ein Energieaustausch mit dem Gleichspannungsnetz 10 erfolgen kann. Diese Eigenschaften ermöglichen den Einsatz von Submodulen 3, die bereits aus einem modularen Multilevel-Stromrichter bekannt sind. Ein entsprechendes Ausführungsbeispiel für einen derartigen Aufbau zeigt die FIG 2. Die Submodule 3 dieses Aufbaus weisen genau zwei Anschlüsse 33 auf. Je nach benötigter Spannung wird für eine Spannungsquelle ein Submodul 3 oder eine Reihenschaltung von Submodulen 3 verwendet. Auch für die Realisierung des ersten Strompfades 71 können weitere Submodule 9 verwendet werden. Da dieser Strompfad 71 realisiert durch eine Gleichspannungsquelle 66, nur eine unipolare Spannung, d. h. nur eine Spannung mit einem Vorzeichen, bereitstellen muss, können als weitere Submodule 9 unipolare Submodule wie beispielsweise ein Halbbrückenmodul oder ein Doppelhalbbrückenmodul verwendet werden.

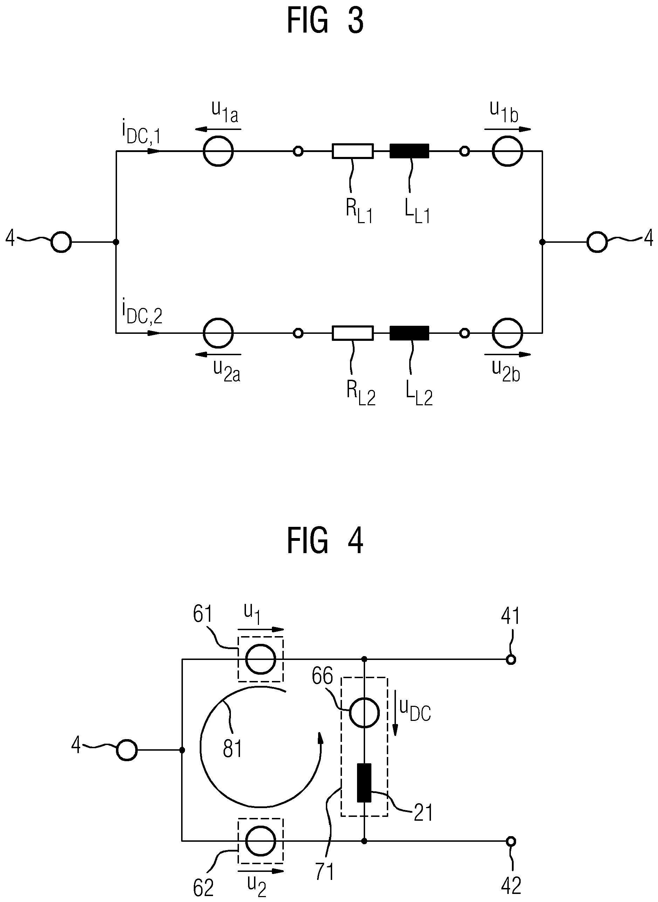

Anhand der FIG 3 kann die Wirkung der Gleichspannungsanteile anschaulich verdeutlicht werden. Die Lastflussreglermodule 2 erzeugen jeweils einen Gleichspannungsanteil der ersten Spannungsquelle 61 mit der Spannung $u_{1a}$ bzw. $u_{1b}$, die als Spannung $U_a = u_{1b} - u_{1a}$ wirkt. Das gleiche gilt für die zweiten Gleichspannungsquellen 62 der beiden Lastflussreglermodule 2 mit der Spannung $U_b = u_{2b} - u_{2a}$. Die Induktivitäten $L_{Lx}$ haben keinen Einfluss auf den Gleichstrom. Somit ergibt sich der Zusammenhang

$$U_a + R_{L1} \cdot i_{DC,1} = U_b + R_{L2} \cdot i_{DC,2}.$$

Damit ein energieneutraler Betrieb der Spannungsquellen durch die Verwendung einer Wechselspannung realisiert werden kann, sind die durch den Gleichspannungsanteil ausgetauschten Energien der ersten Spannungsquelle 61 und der zweiten Spannungsquelle 62 betraglich gleich und unterscheiden sich im Vorzeichen. Dies führt zu

$$U_a \cdot i_{DC,1} = -U_b \cdot i_{DC,2}.$$

Führt man nun zwei Hilfsvariablen

$$K_I = \frac{i_{DC,1}}{i_{DC,1}+i_{DC,2}} \text{ Stromteilungsfaktor}$$

und

$$K_L = \frac{R_{L2}}{R_{L1}} \qquad \text{Widerstandsverhältnis}$$

zur Beschreibung des Systemzustands ein, so ergeben sich folgende Spannungen, die es erlauben, den Lastflussregler energieneutral zu betreiben

$$U_a = R_{L1} \cdot \left( i_{DC,1} + i_{DC,2} \right)(1 - K_I)[K_L(1 - K_I) - K_I]$$

und

$$U_b = -R_{L1} \cdot \left( i_{DC,1} + i_{DC,2} \right)K_I[K_L(1 - K_I) - K_I].$$

Damit kann jede gewünschte Stromaufteilung $K_I$ gesteuert oder geregelt werden. Es ist ebenfalls möglich, eine Leitung stromfrei zu schalten ($K_I$=1 bzw. $K_I$=0) oder den Stromfluss umzukehren. Die genannten Werte für die Gleichspannungsanteile erfüllen auch die Bedingung, dass die ersten und zweiten Spannungsquellen jeweils betraglich die gleiche Energie austauschen, wobei sich diese Summen um das Vorzeichen unterscheiden.

Die Regelung der Stromaufteilung bzw. der Leistungsaufteilung kann mit Hilfe eines Regelkreises vorgenommen werden, wobei die o.g. Werte sich für eine Vorsteuerung eignen. Der Regelkreis kann darüber beispielsweise einen PI Regler als Regler aufweisen. Dadurch können Ungenauigkeiten, sich ändernde Parameter im Gleichspannungsnetz oder auch Störungen zuverlässig ausgeregelt werden.

Darüber hinaus erzeugen die Spannungsquellen 61,62 jeweils einen Wechselspannungsanteil. Die Wechselspannungsanteile der ersten Spannungsquellen 61 der beiden Lastflussreglermodule 2 eines Lastflussreglers, sowie die Wechselspannungsanteile der zweiten Spannungsquellen 62 heben sich derart auf, dass diese in der Spannung zwischen den Gleichspannungsteilnetzen 11,12 nicht enthalten sind. Zur Beschreibung der Wechselspannungsanteile der Spannungsquellen 61,62 dient FIG 4. Die Vereinfachung der FIG 3 für die Gleichspannungsanteile konnte gegenüber der FIG 4 daher erfolgen, da der erste Strompfad 71 keinen Gleichstrom führt bzw. diesen hinreichend unterdrückt. Der erste Strompfad wirkt daher als Leerlauf für die Gleichspannung. Für die Wechselspannungsanteile ist jedoch auch der erste Strompfad 71 von Bedeutung, da die erste Spannungsquelle 61, die zweite Spannungsquelle 62 und der erste Strompfad 71 eine Masche 81 bilden. Die Gleichspannungsquelle 66 hat keinen Einfluss auf das Wechselspannungsverhalten. Durch die erste Spannungsquelle 61 und die zweite Spannungsquelle 62 wird ein Wechselstrom in dieser Masche 81 erzeugt, der einen Austausch von elektrischer Energie zwischen der ersten Spannungsquelle 61 und der zweiten Spannungsquelle 62 bewirkt. Dieser Energieaustausch entspricht vom Betrage her dem durch den Gleichanteil hervorgerufenen Energieaustausch und gleicht diesen im zeitlichen Mittel aus. Dieser Energieaustausch erfolgt in beiden Lastflussreglermodulen 2 des Lastflussreglers, so dass auch hier die Energie des Gleichspannungsanteils im zeitlichen Mittel ausgeglichen wird.

Wenn die Induktivität 21 in beiden Lastflussreglermodulen 2 gleich ist, wird bei gleichem Wechselspannungsanteil der gleiche Wechselstrom bei beiden Lastflussreglermodulen 2 in der jeweiligen Masche 81 erzeugt. Damit sind auch die ausgetauschten Energien bei beiden Lastflussreglermodulen gleich. Dann erfolgt auch die Aufteilung der Gleichspannung $U_a$ und $U_b$ auf die Gleichspannungsanteile der jeweiligen Lastflussrelgermodule 2 zu gleichen Teilen. Wenn sich, beispielsweise aufgrund unterschiedlicher Induktivitäten 21, unterschiedliche Wechselströme in den jeweiligen Maschen 81 ausbilden und sich daher ein unterschiedlicher Energieaustausch in den Lastflussreglermodulen 2 ergibt, wird die Aufteilung der Gleichspannungsanteile entsprechend an die Energieverhältnisse der Wechselspannungsanteile angepasst. Dadurch kann für jeden Betriebszustand sichergestellt werden, dass sich die Energien der Spannungsquellen 61,62 beider Lastflussreglermodule 2 derart ausgleichen, dass alle Spannungsquellen energieneutral betrieben werden können. Dies ermöglicht den Einsatz von Spannungsquellen, die keine oder kleine Energiespeicher mit geringer Kapazität aufweisen. Ebenso benötigen diese Spannungsquellen keine weiteren Anschlüsse, um Energie mit dem Gleichspannungsnetz über weitere Anschlüsse auszutauschen. Dadurch können beispielsweise zweipolige Submodule 3 genutzt werden, die aus der Anwendung eines modularen Multilevel-Stromrichters bekannt und erprobt sind.

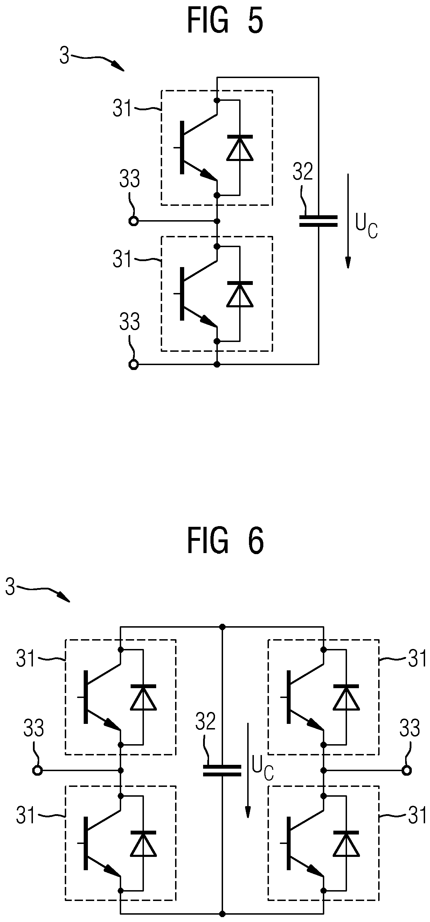

Die folgenden Figuren zeigen Ausführungsbeispiele für ein derartiges Submodul 3. Eine Ausgestaltung eines derartigen zweipoligen Submoduls 3 zeigt FIG 5. Das Submodul 3 weist zwei Halbleiterschalter 31 auf, die in Reihe angeordnet sind. Parallel zu der in Reihe angeordneten Halbleiterschalter 31 ist ein Kondensator 32 angeordnet, an dem eine Kondensatorspannung $U_C$ anliegt. Mit Hilfe von Schalthandlungen der Halbleiterschalter 31 kann die Kondensatorspannung oder ein Kurzschluss, d.h. U=0V, an Anschlüssen 33 des Submoduls 3 erzeugt werden. Das Submodul weist genau zwei Anschlüsse auf. Somit kann der Kondensator nur über diese Anschlüsse geladen oder entladen werden.

Dabei ist ein erster Anschluss 33 der zwei Anschlüsse 33 des Submoduls 3 elektrisch mit der Verbindung zwischen den zwei Halbleiterschaltern 31 verbunden. Ein zweiter Anschluss 33 der zwei Anschlüsse 33 ist dabei mit einem der Anschlüsse des Kondensators 32 elektrisch verbunden. Ein derartiges Submodul 3 wird auch als Halbbrückenmodul bezeichnet.

Die FIG 6 zeigt ein weiteres Ausführungsbeispiel eines Submoduls 3. Dieses zweipolige Submodul 3 weist vier Halbleiterschalter 31 auf. Parallel zu dem Kondensator 32 sind im Vergleich zum Halbbrückenmodul zwei weitere Halbleiterschalter 31 in Reihe angeordnet. Dabei ist ein erster Anschluss 33 der zwei Anschlüsse 33 des Submoduls 3 elektrisch mit der Verbindung zwischen den zwei ersten Halbleiterschaltern 31 verbunden und ein zweiter Anschluss 33 der zwei Anschlüsse 33 des Submoduls 3 elektrisch mit der Verbindung zwischen den zwei weiteren Halbleiterschaltern 31 verbunden. Mit Hilfe von Schalthandlungen der Halbleiterschalter 31 kann die positive Kondensatorspannung, die negative Kondensatorspannung oder ein Kurzschluss an den Anschlüssen 33 des Submoduls 3 erzeugt werden. Ein derartiges Submodul 3 wird auch als Vollbrückenmodul bezeichnet.

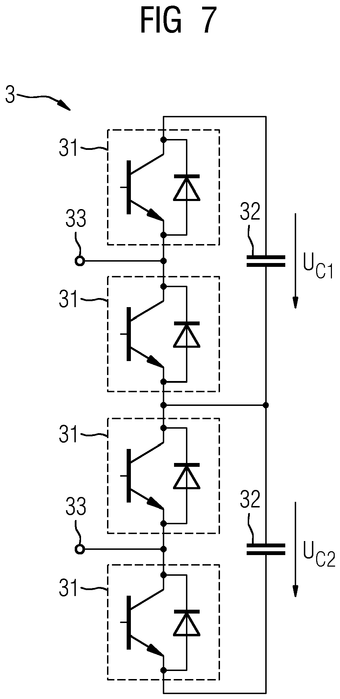

Die FIG 7 zeigt ein Doppelhalbbrückenmodul, bei dem zwei Halbbrückenmodule an ihrem zweiten Anschluss miteinander verbunden sind. Das zweipolige Submodul weist vier Halbleiterschalter 31 und zwei Kondensatoren 32 mit einer ersten Kondensatorspannung $U_{C1}$ und einer zweiten Kondensatorspannung $U_{C2}$ auf. Mit Hilfe von Schalthandlungen der Halbleiterschalter 31 kann die erste Kondensatorspannung $U_{C1}$, die zweite Kondensatorspannung $U_{C2}$, die Summe der Kondensatorspannungen $U_{C1}+U_{C2}$ oder ein Kurzschluss an den Anschlüssen 33 des Submoduls 3 erzeugt werden.

Zur Realisierung einer Spannungsquelle können alle diese Submodule 3 genutzt werden. Darüber hinaus können auch weitere Submodule 3 genutzt werden, insbesondere dann, wenn diese auch für die Verwendung in einem modularen Multilevel-Stromrichter geeignet sind. Dabei können in einer Reihenschaltung auch unterschiedliche Submodule 3 miteinander kombiniert werden.

Bezugszeichenliste

| | |
|---|---|
| 1 | Lastflussregler |
| 2 | Lastflussreglermodul |
| 3 | Submodul |
| 4 | Netzanschluss |
| 5 | Netzwerkknoten |
| 8 | Leitung |
| 9 | weiteres Submodul |
| 10 | Gleichspannungsnetz |
| 11 | erstes Gleichspannungsteilnetz |
| 12 | zweites Gleichspannungsteilnetz |
| 21 | Induktivität |
| 31 | Halbleiterschalter |
| 32 | Kondensator |
| 33 | Anschlüsse des Submoduls (3) |
| 41 | erster Übertragungsanschluss |
| 42 | zweiter Übertragungsanschluss |
| 61 | erste Spannungsquelle |
| 62 | zweite Spannungsquelle |
| 66 | Gleichspannungsquelle |
| 71 | erster Strompfad |
| 81 | Masche |

**Patentansprüche**

1. Lastflussreglermodul (2) für einen Lastflussregler (1), aufweisend:

   - einen Netzanschluss (4),
   - einen ersten Übertragungsanschluss (41) und einen zweiten Übertragungsanschluss (42),
   - eine erste Spannungsquelle (61), die zwischen dem ersten Netzanschluss (4) und dem ersten Übertragungsanschluss (41) angeordnet ist,
   - eine zweite Spannungsquelle (62), die zwischen dem ersten Netzanschluss (4) und dem zweiten Übertragungsanschluss (42) angeordnet ist,
- einen ersten Strompfad (71), der zwischen dem ersten Übertragungsanschluss (41) und dem zweiten Übertragungsanschluss (42) angeordnet und derart ausgebildet ist, einen Gleichstrom durch den ersten Strompfad (71) zu unterdrücken,

wobei die erste und zweite Spannungsquelle (61,62) jeweils eingerichtet sind, eine Spannung mit einem Gleichanteil und einem Wechselspannungsanteil zu erzeugen.

2.   Lastflussreglermodul (2) nach Anspruch 1, wobei der erste Strompfad (71) durch eine Gleichspannungsquelle (66) gebildet wird.

3.   Lastflussreglermodul (2) nach einem der Ansprüche 1 oder 2, wobei mindestens eine der Spannungsquellen (61,62) durch ein Submodul (3) oder eine Reihenschaltung von Submodulen (3) gebildet wird, wobei das Submodul (3) mindestens zwei Halbleiterschalter (31) und mindestens einen Kondensator (32) aufweist, die derart angeordnet sind, dass mittels der Halbleiter (31) zumindest die Schaltzustände Kurzschluss und Kondensatorspannung an Anschlüssen (33) des Submoduls (3) erzeugbar sind.

4.   Lastflussreglermodul (2) nach Anspruch 3, wobei das Submodul (3) mindestens vier Halbleiterschalter (31) aufweist, die derart angeordnet sind, dass mittels der Halbleiter (31) zumindest die Schaltzustände Kurzschluss, positive Kondensatorspannung und negative Kondensatorspannung an den Anschlüssen (33) des Submoduls (3) erzeugbar sind.

5.   Lastflussreglermodul (2) nach einem der Ansprüche 3 oder 4, wobei das Submodul (3) bzw. die Submodule (3) genau zwei Anschlüsse (33) zur Übertragung von elektrischer Energie aufweist bzw. aufweisen.

6.   Lastflussreglermodul (2) nach einem der Ansprüche 1 bis 5, wobei die Gleichspannungsquelle (66) durch ein weiteres Submodul (9) oder eine Reihenschaltung von weiteren Submodulen (9) gebildet wird, wobei das weitere Submodule (9) mindestens zwei Halbleiterschalter (31) und mindestens einen Kondensator (32) aufweist, die derart angeordnet sind, dass mittels der Halbleiter (31) zumindest die Schaltzustände Kurzschluss und Kondensatorspannung an Anschlüssen (33) des weiteren Submoduls (9) erzeugbar sind.

7.   Lastflussregler (1) zur Übertragung von elektrischer Energie zwischen einem ersten Gleichspannungsteilnetz (11) und einem zweiten Gleichspannungsteilnetz (12) eines Gleichspannungsnetzes (10) mittels zweier Leitungen (8), wobei der Lastflussregler (1) zwei Lastflussreglermodule (2) nach einem der Ansprüche 1 bis 6 umfasst.

8.   Gleichspannungsnetz (10), aufweisend

    - einen Lastflussregler (1) nach Anspruch 7,
    - ein erstes Gleichspannungsteilnetz (11) und ein zweites Gleichspannungsteilnetz (12),
    - zwei Leitungen (8),

wobei das erste Gleichspannungsteilnetz (11) mit dem Netzanschluss (4) eines ersten der zwei Lastflussreglermodule (2) elektrisch verbunden ist, wobei das zweite Gleichspannungsteilnetz (12) mit dem Netzanschluss (4) eines zweiten der zwei Lastflussreglermodule (2) elektrisch verbunden ist, wobei die Leitungen (8) zwischen den zwei Lastflussreglern (41,42) angeordnet sind und mit den jeweiligen Übertragungsanschlüssen (41,42) der zwei Lastflussreglermodule (2) elektrisch verbunden sind.

9.   Gleichspannungsnetz (10) nach Anspruch 8, wobei sich die Leitungslängen der zwei Leitungen (8) zwischen dem Lastflussregler (1) und dem zweiten Gleichspannungsteilnetz (12) um mindestens 10%, insbesondere um mehr als 40%, unterscheiden.

10.  Verfahren zum Betreiben eines Lastflussreglers (1) nach Anspruch 7 oder eines Gleichspannungsnetzes (10) nach einem der Ansprüche 8 oder 9, wobei ein erster der zwei Lastflussreglermodule (2) abhängig von einem ersten Gleichstrom ($i_{DC,1}$) zwischen dem Netzanschluss (4) und dem ersten Übertragungsanschluss (41) und/oder einem zweiten Gleichstrom ($i_{DC,2}$) zwischen dem Netzanschluss (4) und dem zweiten Übertragungsanschluss (42) von der ersten und zweiten Spannungsquelle (61,62) jeweils ein Gleichspannungsanteil erzeugt wird, wobei der durch den Gleichspannungsanteil hervorgerufene Energieaustausch der zwei Spannungsquellen (61,62) des ersten der zwei Lastflussreglermodule (2) den gleichen Betrag und unterschiedliches Vorzeichen haben, wobei die erste und die zweite Spannungsquelle (61,62) jeweils einen Wechselspannungsanteil erzeugen, der den durch den Gleichspannungsanteil hervorgerufenen Energieaustausch der beiden Spannungsquellen (61,62) kompensiert,

wobei ein zweiter der zwei Lastflussreglermodule (2) einen Wechselstrom oder eine Wechselspannung gegenüber einem Bezugspotential am ersten Übertragungsanschluss (41) erfasst, wobei die erste Spannungsquelle (61) des zweiten der zwei Lastflussreglermodule (2) einen Wechselspannungsanteil erzeugt, der einem Wechselstrom durch das Lastflussreglermodul (2) entgegenwirkt oder den Wechselstrom kompensiert, wobei die Spannungsquellen (61,62) des zweiten der zwei Lastflussreglermodule (2) jeweils einen Gleichspannungsanteil erzeugen, der derart bemessen ist, dass der durch den Wechselspannungsanteil hervorgerufene Energieaustausch durch den durch den Gleichspannungsanteil hervorgerufenen Energieaustausch kompensiert wird.

FIG 1

EP 4 654 412 A1

# FIG 2

# FIG 3

$u_{1a}$
$i_{DC,1}$
$u_{1b}$

$R_{L1}$    $L_{L1}$

4

4

$i_{DC,2}$

$u_{2a}$    $R_{L2}$    $L_{L2}$    $u_{2b}$

# FIG 4

61    $u_1$    41

66    $u_{DC}$

81

4

21

71

62    $u_2$    42

## FIG 5

## FIG 6

# FIG 7

**Europäisches Patentamt**
**European Patent Office**
**Office européen des brevets**

# EUROPÄISCHER RECHERCHENBERICHT

**Nummer der Anmeldung**

EP 24 17 7682

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HOFMANN VIKTOR ET AL: "A modular and scalable HVDC current flow controller", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8. September 2015 (2015-09-08), Seiten 1-9, XP032800085, DOI: 10.1109/EPE.2015.7309081 [gefunden am 2015-10-27] | 1-6 | INV. H02J1/08 H02J1/10 ADD. H02J3/36 |
| A | * das ganze Dokument * ----- | 7,8,10 | |
| X | VIDAL-ALBALATE RICARDO ET AL: "Modular multi-level DC-DC converter for high-power and high-voltage applications", IECON 2015 - 41ST ANNUAL CONFERENCE OF THE IEEE INDUSTRIAL ELECTRONICS SOCIETY, IEEE, 9. November 2015 (2015-11-09), Seiten 3798-3803, XP032855827, DOI: 10.1109/IECON.2015.7392692 [gefunden am 2016-01-25] * das ganze Dokument * ----- | 1-10 | |
| X | Univ.Bayreuth: "Gleichspannungswandler für die Hochspannungsgleichstromübertragung", , 29. April 2015 (2015-04-29), Seiten 1-4, XP093214006, Gefunden im Internet: URL:https://www.mechatronik.uni-bayreuth.de/pool/dokumente/beispielprojekte/hvdc-energieuebertragung.pdf | 1-6 | RECHERCHIERTE SACHGEBIETE (IPC) H02J |
| A | * Seite 4 * ----- | 7,8,10 | |

Der vorliegende Recherchenbericht wurde für alle Patentansprüche erstellt

| Recherchenort | Abschlußdatum der Recherche | Prüfer |
|---|---|---|
| München | 6. November 2024 | Hartmann, Martin |

EPO FORM 1503 03.82 (P04C03)